# EUROPEAN PATENT SPECIFICATION

(11) **EP 4 112 881 B1**
(45) Date of publication and mention of the grant of the patent: **21.08.2024**
(21) Application number: 21183190.4
(22) Date of filing: 01.07.2021
(51) Int. Cl.: F01D 5/16, F01D 5/18, F01D 5/10

(54) **BLADE FOR A TURO MACHINE, BLADE ASSEMBLY, GAS TURBINE, AND METHOD FOR MANUFACTURING A BLADE FOR A TURBO MACHINE**
SCHAUFEL FÜR EINE TURBOMASCHINE, SCHAUFELANORDNUNG, GASTURBINE UND VERFAHREN ZUR HERSTELLUNG EINER SCHAUFEL FÜR EINE TURBOMASCHINE
PALE POUR TURBOMACHINE, ENSEMBLE PALES, TURBINE À GAZ ET PROCÉDÉ DE FABRICATION D'UNE PALE DE TURBOMACHINE

(43) Date of publication of application: 04.01.2023
(73) Proprietor: Doosan Enerbility Co., Ltd., Seongsan-gu Changwon-si, Gyeongsangnam-do 51711 (KR)
(72) Inventor: TSYPKAYKIN, Igor, 5400 Baden (CH); MARTIN, Stafan Emanuel, 5400 Baden (CH); BEAUMONT, Wade, 5400 Baden (CH); KRUECKELS, Joerg, 5400 Baden (CH); HOFFMANN, Willy H., 5400 Baden (CH)
(74) Representative: BCKIP Part mbB

(56) References cited:
- CN-A- 112 196 626
- US-A1- 2008 118 366
- US-A1- 2010 247 330
- US-A1- 2020 102 842

## Description

### TECHNICAL FIELD

The present invention relates to a blade for a turbo machine such as a gas turbine, a blade assembly, a gas turbine, and a method for manufacturing a blade for a turbo machine.

### BACKGROUND

Blades of turbo machines such as gas turbines typically comprise an airfoil section or body that is exposed to a working fluid, and a root body which forms a mechanical interface for coupling the blade to a rotor disk. Blades of turbo machines have to be able to withstand high temperatures. Therefore, blades usually comprise inner voids or cavities for circulating a cooling fluid therein. The blades, conventionally, are manufactured in a casting process, wherein a core is provided to form the inner cavity, and said core is over molded with liquid metal. Typically, the inner void opens at the root body to remove the core after the casting process and to receive the cooling fluid.

For example, GB 2 411 442 A discloses a turbine blade having a firtree shaped root body, wherein multiple radial cooling channels are formed in the root body. A similar turbine blades are disclosed in EP 3 059 394 A1, US 2008/0118366 A1, and US 2010/0247330 A1.

CN 112196626 A describes a blade assembly including a blade that has an airfoil and a root, and a lock tube. The blade includes a cooling passage extending from a bottom of the root through the airfoil to an exhaust hole on the tip of the airfoil. The bottom of the root is provided with a concave groove in which the lock tube is received. The lock tube includes an air outlet for exhausting cold air into the cooling passage of the blade.

The root body, as the mechanical interface to the disk, carries high mechanical loads. Thus, in order to achieve a uniform load distribution within the root body, number and cross section of openings of the inner void at the root body have to be designed carefully.

### SUMMARY OF THE INVENTION

One of the ideas of the present invention is to provide improved solutions for a blade of a turbo machine, in particular, solutions that simplify manufacturing of the blade and allow for a uniform load distribution within a root body of the blade.

The present invention provides a blade for a turbo machine in accordance with claim 1, a blade assembly in accordance with claim 12, a gas turbine in accordance with claim 13, and a method for manufacturing a blade in accordance with claim 15.

According to a first aspect of the invention, a blade for turbo machine, in particular for a gas turbine, includes an airfoil body extending in a radial direction between a root end and a tip end, the air foil body comprising an inner cavity or void that extends from the root end in the radial direction; a root body integrally formed with the airfoil body and extending from the root end of the air foil body to a bottom end in the radial direction, the root body comprising a receiving slot extending from the bottom end in the radial direction and opening into the inner void of the air foil body; and an insert positioned within the receiving slot of the root body, the insert comprising a plurality of through holes extending in the radial direction to form a fluid connection to the inner void. According to a second aspect of the invention, a blade assembly includes a plurality of blades according to the first aspect of the invention and a rotor disk to which said plurality of the turbine blades is coupled.

According to a third aspect of the invention, a gas turbine comprises the turbine blade assembly according to the third aspect of the invention.

According to a fourth aspect of the invention, a method for manufacturing a blade according to the first aspect of the invention is provided. The method includes integrally casting an airfoil body and a root body, the airfoil body extending in a radial direction between a root end and a tip end and comprising an inner void that extends from the root end in the radial direction, the root body extending from the root end of the air foil body to a bottom end in the radial direction. The method further includes machining a receiving slot into the root body, e.g. by milling or eroding, the receiving slot extending from the bottom end in the radial direction and opening into the inner void of the air foil body, and introducing an insert into the receiving slot of the root body, the insert comprising a plurality of through holes extending in the radial direction to form a fluid connection to the inner void.

One of the ideas on which the present invention is based is to provide a blade with a simple exit in the root body in form of a slot and add a plug or insert into the slot to take up the high compression loads acting on the root body. Thus, the slot extends in the radial direction between the inner cavity of the airfoil body and an exit opening formed at the bottom end of the root body. The plug or insert has a cross section that corresponds to the cross section of the slot of the root body.

One of the advantages of the invention is that the blade can be manufactured within a casting process with a small number, e.g. one or two, exits that provide a connection between the inner cavity of the airfoil body to an exterior of the blade. This simplifies the casting process. On the other hand, the insert which is fitted into the slot can receive high loads at its circumferential surface from the root body which leads to a uniform load distribution within the root body.

Further, the through holes in the insert form a fluid path through which cooling fluid can be circulated to and from the inner cavity of the airfoil body. Since a high number of through holes can simply be formed in the insert, e.g. by subtractive methods like drilling or by additive manufacturing, making of the blade is further simplified.

Moreover, the insert advantageously improves mechanical damping at high vibration levels.

Advantageous embodiments of the present disclosure are provided in dependent claims.

According to some embodiments, the root body extends between a front or leading end and a trailing or aft end along an axial direction that runs transverse to the radial direction, wherein the receiving slot extends completely between the front end and the aft end of the root body, and wherein the insert positioned in the receiving slot extends between the front end and the aft end of the root body. Thus, the slot and the insert received therein may extend over the whole axial length of the root body. Thus, the slot can be advantageously machined with a very simple geometry.

According to some embodiments, the insert comprises a first end plate formed at a first axial end of the insert and a second end plate formed at a second axial end of the insert, wherein the first end plate abuts a first end surface forming the leading or front end of the root body, and wherein the second end plate abuts a second end surface forming the trailing or aft end of the root body. Generally, the insert may extend in an insert axial direction between a first axial end and a second axial end. According to some embodiments, the insert may be provided with end plats at its axial ends, said end plates that laterally protruding from a central section of the insert. Thus, the end plates form stops with respect to the axial direction and may abut or contact the end surfaces. This further improves a uniform load distribution, as the contact surface between the insert and the root body is increased.

According to some embodiments, the through holes are only formed in a central region of the insert that, with regard to the axial direction, overlaps with the inner void of the airfoil body. Thereby, weakening of the insert due to the through holes is further reduced.

According to some embodiments, the root body extends between a leading or front end and a trailing or aft end along an axial direction that runs transverse to the radial direction, wherein the receiving slot extends in the axial direction and ends distanced to the front end and the aft end. That is, the slot and the insert received therein may extend only over a part of the axial extension of the root body. Thereby, the overall sized of the slot can be reduced which increases strength of the root body.

According to some embodiments, the insert is brazed to the root body. Brazing helps to further improve load transmission between the insert and the root body. According to further embodiments, the insert is friction fit into the receiving slot. Friction fitting provides the benefit that damping of vibrations is further improved. In particular, the inner diameter and/or width of the receiving slot and the root body may form an interference fit, in which the size of the root body is somewhat greater than the clearance defined by the slot.

According to some embodiments, the through holes of the insert have a circular, an elliptic, or racetrack shaped cross-section. Since the insert is a part separate from the root body, also complex cross sectional shapes of the through holes such as racetrack shaped or elliptic can easily be manufactured.

According to some embodiments, the through holes of the insert are arranged in a row along an insert axial direction. Thereby, a more uniform distribution of both, the mechanical loads and the cooling fluid provided to the inner cavity or void of the airfoil body, can be achieved.

According to some embodiments, a ratio between a distance between adjacent holes in the insert axial direction and a diameter of the through holes with respect to the insert axial direction is greater than one. The distance between the through holes is measured, for example, from a central axis of one through hole to a central axis of the next through hole.

According to some embodiments, the insert has a thickness with regard to an insert thickness direction, and wherein a ration between a diameter of the through holes with regard to the insert thickness direction and the thickness is within a range between 0.1 and 0.8

According to some embodiments, the insert further includes grooves formed at a circumferential surface of the insert and extending in the radial direction between opposite radial ends of the insert, wherein the grooves together with an inner surface of the slot form fluid channels connected to the inner void of the airfoil body. Thus, cooling fluid not only can be provided to the inner void of the airfoil body but also through the grooves provided at the circumferential surface of the insert. Thus, control of the cooling fluid flow can be further improved.

According to some embodiments the blade assembly forms part of a turbine stage of the gas turbine.

According to some embodiments, the method may further include manufacturing the insert, e.g. by machining a generally block shaped body from a massif block and drilling the through holes into the block shaped body. Alternatively, the insert may be built up in an additive manufacturing method, e.g. in a 3D-printing process such as selective laser melting or similar.

The features described herein for one aspect of the invention are also disclosed for the other aspects of the invention and vice versa.

### BRIEF DESCRIPTION OF THE DRAWIGNS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
- Fig. 1: shows a schematic cross-sectional view of a gas turbine according to an embodiment of the invention.
- Fig. 2: shows a schematic partial view of a blade assembly according to an embodiment of the invention
- Fig. 3: shows a schematic side view of a blade for a turbo machine according to an embodiment of the invention;
- Fig. 4: shows an exploded, partial view of a blade for a turbo machine according to an embodiment of the invention;
- Fig. 5: shows a partial view of the blade shown in Fig. 4 in an assembled state;
- Fig. 6: shows a perspective view of an insert of a blade for a turbo machine according to an embodiment not covered by the invention;
- Fig. 7: shows a perspective view of an insert of a blade for a turbo machine according to a further embodiment of the invention;
- Fig. 8: shows detailed, partial view of a circumferential surface of the insert shown in Fig. 7;
- Fig. 9: shows a top view to an insert of a blade for a turbo machine according to an embodiment of the invention;
- Fig. 10: shows a top view to an insert of a blade for a turbo machine according to a further embodiment of the invention;
- Fig. 11: shows a top view to a bottom end of a root body of a blade for a turbo machine according to a further embodiment of the invention.
- Fig. 12: shows a cross sectional view of the blade shown in Fig. 11, taken along line XII-XII;
- Fig. 13: shows a side view of a blade for a turbo machine according to an embodiment of the invention together with a diagram shown a distribution of mechanical stress in the root body along an axial direction; and
- Fig. 14: shows a schematic flow diagram of a method for manufacturing a blade according to an embodiment of the invention.

In the figures like reference signs denote like elements unless stated otherwise.

### DETAILED DESCRIPTION OF THE DRAWINGS

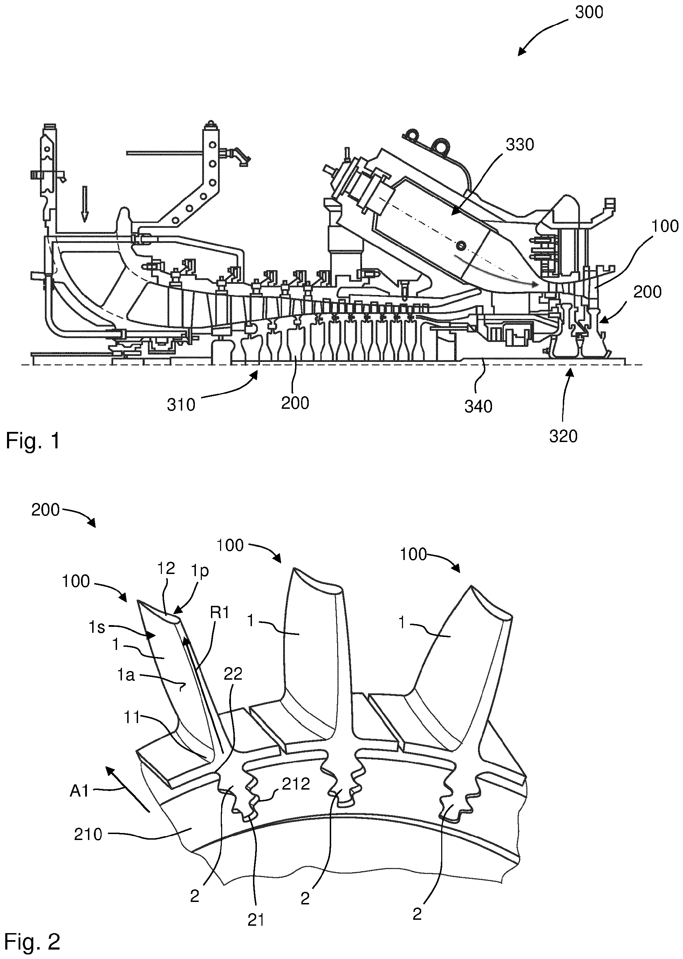

Fig. 1 schematically shows a gas turbine 300 as an example for a turbo machine. The gas turbine 300 includes a compressor section 310 configured to rotate about a rotational axis to compress a working fluid, a turbine section 320 configured to be rotated about the rotational axis by expanding the working fluid, and a combustion chamber 330 for combusting fuel with the working fluid. The turbine section 320 is kinematically coupled to the compressor section 310 in order to rotate the compressor section 310. The compressor section 310 and the turbine section 320 each include a plurality of blade assemblies 200 that may be mounted to a common central shaft 340. Each blade assembly 200 includes a plurality of blades 100 extending in a radial direction and comprising an aerodynamic surface. The working principle of a gas turbine 300 is well known to the person skilled in the art and, therefore, a detailed description thereof will be omitted herein.

Fig. 2 exemplarily shows a blade assembly 200 for a turbo machine, e.g. for the gas turbine 300. The blade assembly 200 includes a plurality of blades 100 and a rotor disk 210 to which said plurality of the turbine blades 100 is coupled. The disk 210 functions as a carrier for the blades 210 and may be fixed to the central shaft 340 of the turbine 300.

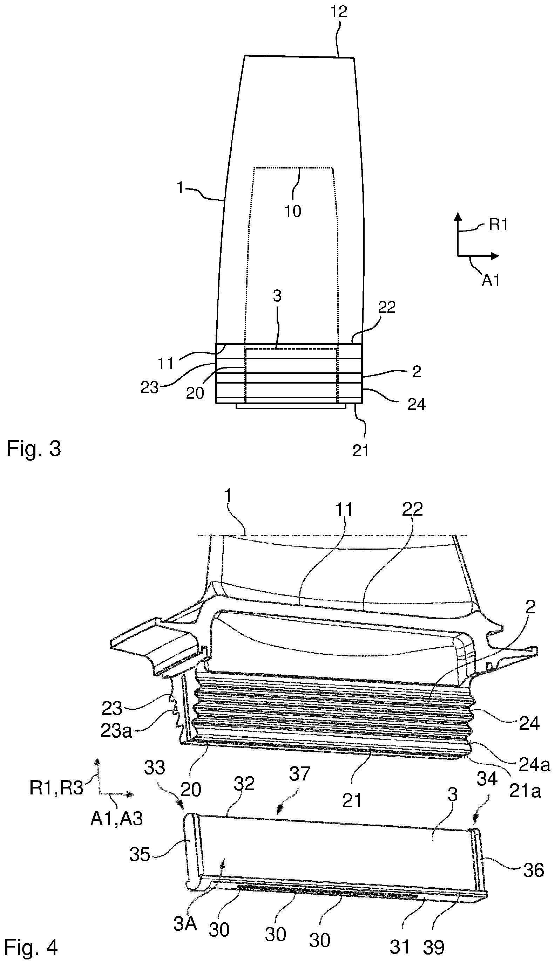

Generally, a blade 100 includes an airfoil body 1, a root body 2, and an insert or plug 3 (not shown in Fig. 2). The blade 100 will be explained in more detail below, referring to Figs. 3 to 13. As schematically shown in Fig. 2, the blade 1 extends in a radial direction R1. The airfoil body 1 includes an aerodynamic surface 1a exposed to the working fluid. In particular, the aerodynamic or flow surface 1a may define a pressure side 1p and a suction side 1s of the airfoil body 1. The root body 2, generally, is coupled to an inner radial end or root end 11 of the airfoil body 1 and is integrally formed as one single piece with the airfoil body 1. As shown in Fig. 2, the root body 2 forms a mechanical interface by which the blade 100 is coupled to the disk 210. For example, as shown in Fig. 2, the root body 2 may comprise a firtree shaped cross section and being inserted into a coupling groove 212 of the disc 210 having a corresponding firtree shaped cross section.

Fig. 3 schematically shows a side view of the blade 100. As visible in Fig. 3, the airfoil body 1 extends in the radial direction R1 between a radial inner end or root end 11 and a radial outer end or tip end 12. Further, the airfoil body 1 comprises an inner cavity or void 10 that extends from the root end 11 in the radial direction R1. Optionally, the cavity or void 10 may extend from the root end 11 to the tip end 12 so as to form an opening at the tip end 12. Thus, the airfoil body 1 is a hollow body.

The root body 2 extends between a bottom end 21 and a top end 22 in the radial direction R1. As mentioned above, the root body 2 is integrally formed with the airfoil body 1, wherein the top end 22 of the root body 2 is adjacent to or corresponds to the root end 11 of the airfoil body 1. Thus, the root body 2 extends from the root end 11 of the air foil body 1 to the bottom end 21 in the radial direction R1. With regard to an axial direction A1 that extends transverse to the radial direction R1, the root body 2 extends between a leading or front end 23 and a aft end 24 opposite to the front end 23. As schematically shown in Fig. 3, the front end 23 of the root body 2 may be formed by a first end surface 23a which may, for example, be plane or even. Similar, the aft end 24 of the root body 2 may be formed by a second end surface 24a which may, for example, be plane or even.

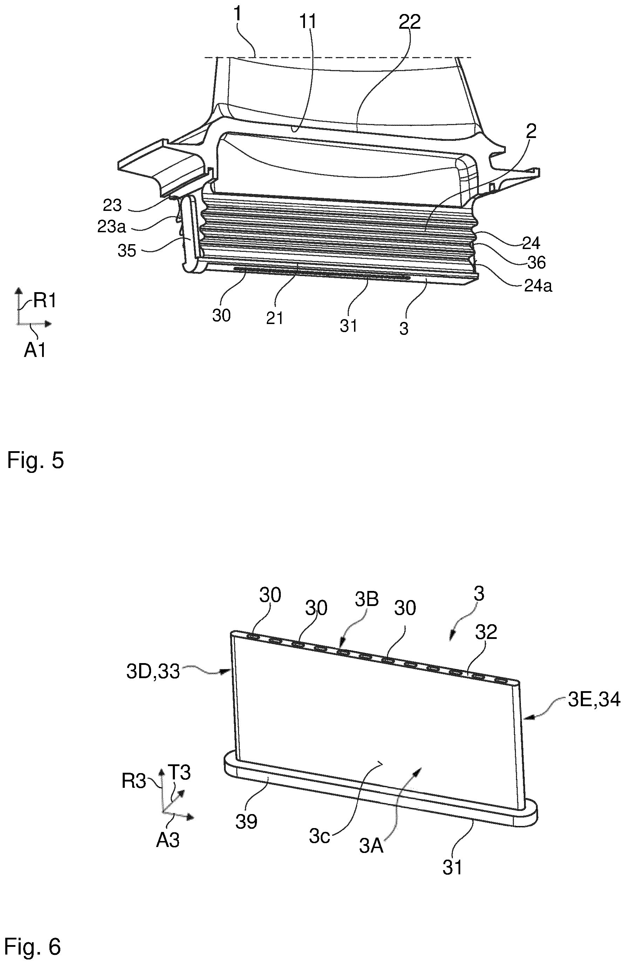

As schematically indicated by dotted lines in Fig. 3, the root body 2 comprises a receiving slot 20 that extends from the bottom end 21 in the radial direction R1 and opens into the inner void 10 of the air foil body 1. Thus, the slot 20 forms a through hole that extends through the root body 2 from the bottom end 21 to the top end 22 of the root body 2 in the radial direction R1. Further, the slot 20 comprises a predefined length with regard to the axial direction A1 or, generally, extends in the axial direction A1. As exemplarily shown in Fig. 3, 11, and 12, the slot 20 may, for example, end distanced to the front end 23 and the aft end 24. Alternatively, as exemplarily shown in Figs. 4 and 5, the receiving slot 20 may also extend completely between the front end 23 and the aft end 24 of the root body 2. Thus, generally, the receiving slot 20 is a longitudinal opening extending in the axial direction A1.

The insert 3 will be explained in more detail below referring in particular to Figs. 6 to 10. Generally, the insert 3, as schematically shown in Fig. 3, is positioned or inserted within the receiving slot 20 of the root body 2. For example, the insert 3 may be brazed to the root body 2, i.e. to an inner surface of the slot 20. Alternatively, the insert 3 may be friction fit into the receiving slot 20, that is, at least a width of the slot 20 and a thickness d3 of the insert may be dimensioned such that the thickness d3 is oversized relative to the width of the slot 20.

As schematically shown in Fig. 6, the insert 3 has the shape of a block. The insert 3, with regard to an insert axial direction A3, extends between a first axial end 33 and an opposite second axial end 34. Similar, with regard to an insert radial direction R3 extending transverse to the insert axial direction A3, the insert extends between a first radial end 31 and a second radial end 32. The insert 3 includes a circumferential surface 3c. As schematically shown in Fig. 6, the circumferential surface 3c may, for example, define a first side face 3A and a second side face 3B opposite to the first side face 3A with regard to a thickness direction T3 that extends transverse to the insert axial direction A3 and the insert radial direction R3. A thickness t3 of the insert 3 is defined between said opposite first and second side faces 3A, 3B. Further, the circumferential surface 3c may, for example, define rounded or plane end faces 3D, 3E forming the first and second axial ends 33, 34 of the insert 3. In an option not covered by the invention, the insert 3 may comprise a radial end rim 39 arranged at the first radial end 31 and protruding from the circumferential surface 3c with regard to the thickness direction T3. As exemplarily shown in Fig. 6, the rim 39 may extend over the whole circumference of the insert 3. Additionally or alternatively to the rim 39, the insert 3 may comprise a first end plate 35 formed at the first axial end 33 of the insert 3 and a second end plate 36 formed at the second axial end 34 of the insert 3, as exemplarily shown in Figs. 4 and 5. As visible best in Fig. 4, the end plates 35, 36, protrude in the thickness direction T3 from the insert 3, for example, over the side faces 3A, 3B of the insert 3.

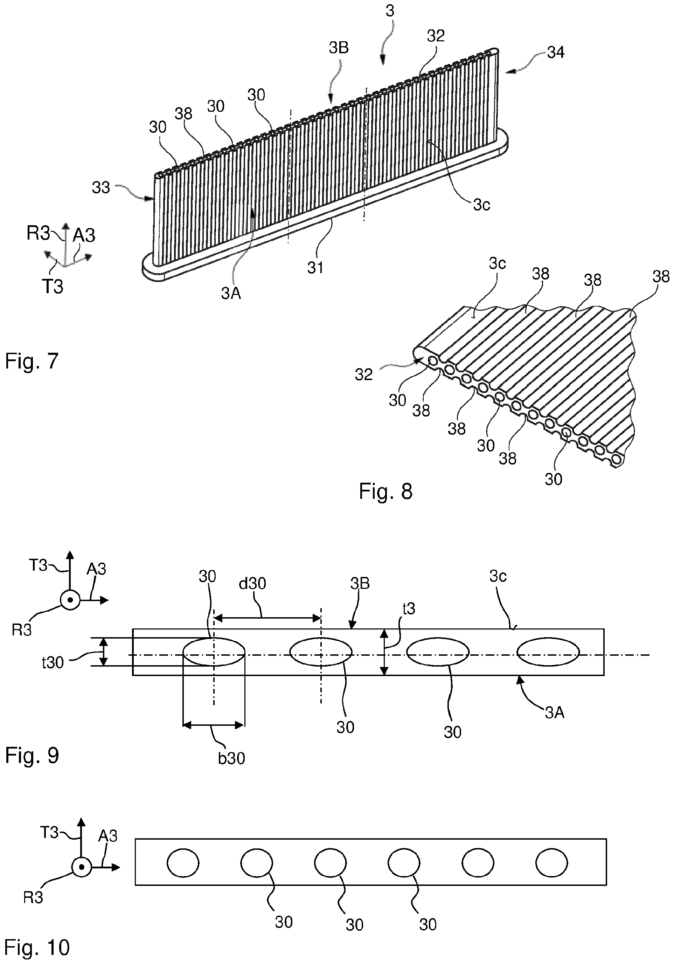

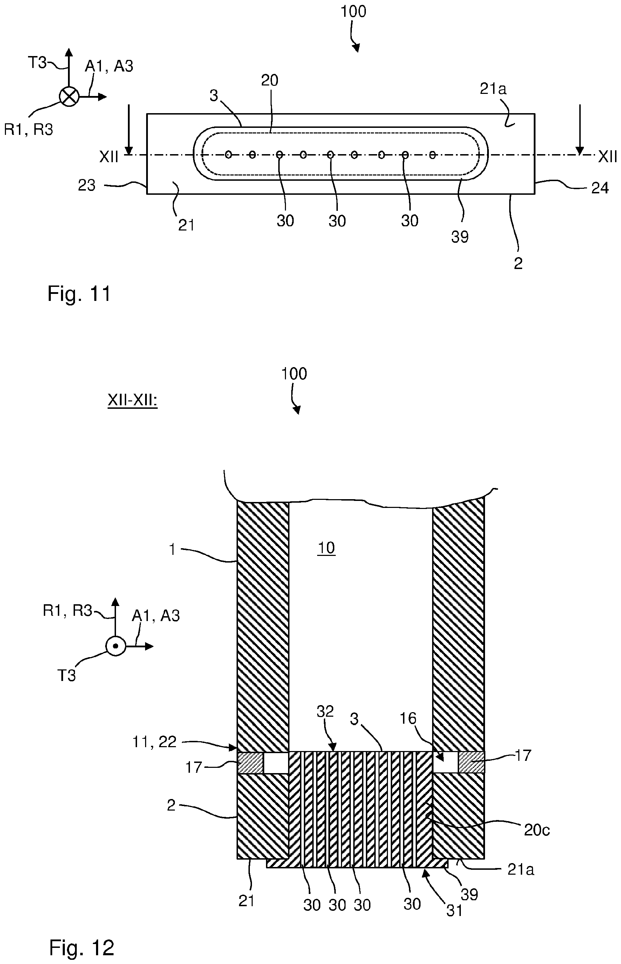

Referring again to Fig. 6, the insert 3 includes a plurality of through holes 30 extending in the radial direction R1 between the first radial end 31 and the second radial end 32. As visible best in Fig. 12, in a state when the insert 3 is positioned within the receiving slot 20 of the root body 2 such that the insert axial direction A3 is aligned with the axial direction A1 and the insert radial direction R3 is aligned with the radial direction R1, the through holes 30 form a fluid connection to the inner void 10. As exemplarily shown in fig. 6, the through holes 30 may have a racetrack shaped cross-section. Alternatively, the through holes 30 may also have an elliptic cross-section as exemplarily shown in Fig. 9, or a circular cross-section as exemplarily shown in Figs. 7, 8, and 10.

Generally, the through holes 30 may be arranged in a row one after each other with respect to the insert axial direction A3. One through hole 30 may be distanced to an adjacent through hole 30 in the insert axial direction A3 by a distance d30. The distance d30 in the insert axial direction A3 may be measured between the central axes of the through holes 30, as schematically shown in Fig. 9. Optionally a ratio between the distance d30 between adjacent holes 30 and a diameter b30 of the through holes 30 with respect to the insert axial direction A3, that is, the ratio d30:b30 may be greater than one. As is further exemplarily shown in Fig. 9, optionally, a ration between a diameter t30 of the through holes 30 with regard to the insert thickness direction T3 and the thickness t3 of the insert may lie within a range between 0.1 and 0.8.

As exemplarily shown in Figs. 7 and 8, the insert 3 may optionally include a plurality of grooves 38 formed in the circumferential surface 3c of the insert 3. As shown in Fig. 7, the grooves 39 may be formed in the side faces 3A, 3B. Generally, the grooves 38 extend in the insert radial direction R1. For example, the grooves 38 may extend in parallel to each other and may be distanced to each other in the insert axial direction A3. As exemplarily shown in Fig. 8, the grooves 38 may have a semi-circular cross-section. For example, one groove 38, with respect to the insert axial direction A3, may be arranged between two adjacent through holes 30. Although Figs. 7 and 8 show that grooves 38 are formed at both side faces 3A, 3B of the insert 3, it may also be provided that grooves 38 are only on one of the side faces 3A, 3B.

The insert 3 may be made of a metal material able to withstand high temperatures. For example, the insert 3 may be made of a nickel based alloy such as IN625, IN718, Hast X, Haynes 230, or similar. Alternatively, cobalt alloy such as L-605, or alloy steels such as SS310 would be possible materials.

As already mentioned above, in an assembled state of the blade 100, the insert 3 is inserted into or positioned within the slot 20 of the root body 2. In this state, the insert axial direction A3 is aligned with the axial direction A1, and the insert radial direction R3 is aligned with the radial direction R1. This state is shown in Figs. 3, 5, 11, and 12. The through holes 30 form a fluid connection to the inner void 10 of the airfoil body 1. If provided, the rim 39 abuts or is in contact with an end surface 21a forming the bottom end 21 of the root body 2. Similar, if provided, the optional the first end plate 35 abuts the first end surface 23a forming the leading end 23 of the root body 2, and the second end plate 36 abuts the second end surface 24b forming the trailing end 34 of the root body 2 (Fig. 5). Further, the optional grooves 38 of the insert 3, together with an inner surface 20c of the slot 20 form fluid channels connected to the inner void 10 of the airfoil body 1.

Generally, the dimensions and the shape of the insert 3 and the slot 20 correspond to each other such that the insert 3 can be received within the slot 20. For example, when the slot 20 extends between the leading end 23 and the trailing end 24 of the root body 2, also the insert may extend between the leading end 23 and the trailing end 24 of the root body 2, as shown in Fig. 5. Likewise, when the slot 20 ends distanced to the leading and trailing ends 23, 24 of the root body 2, the length of the insert 3 may correspond to the length of the slot 20. Furthermore, when the void 10 at the root end 11 of the airfoil body 1 has a length in the axial direction A1 smaller than the length of the slot 20 in the axial direction, the through holes 30 may arranged such within the insert that they are only formed in a central region 37 of the insert 3 that, with regard to the axial direction A1, overlaps with the inner void 10 of the airfoil body 1. Figs. 4 and 5 exemplarily show an insert 3 with through holes 30 only formed in the central region 37.

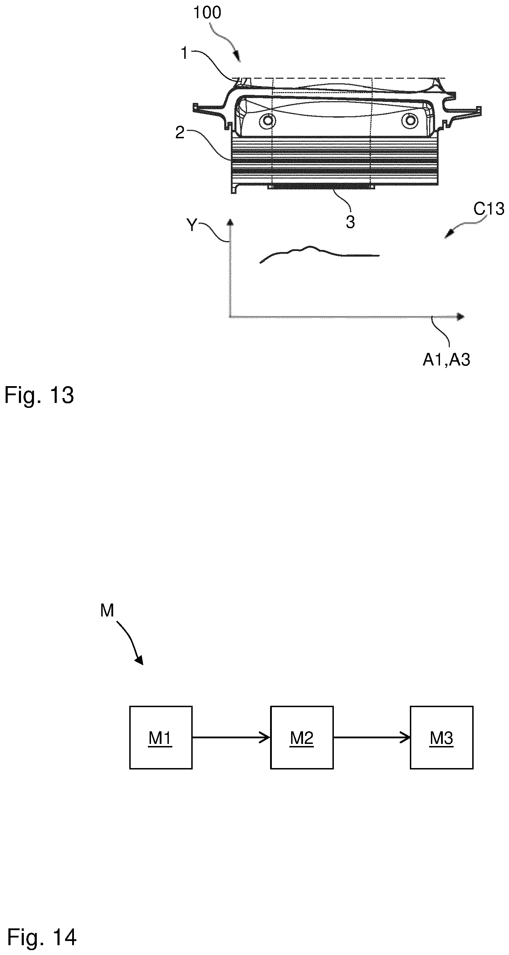

Fig. 13 schematically shows one of the major benefits of the blades 1 configured as described above. In Fig. 13, the root body 2 and a root end region of the airfoil body 1 are shown with the insert 3 inserted into the slot 20 together with a diagram C13. In the diagram C13, an abscissa or x-coordinate is aligned with the axial direction A1, and an ordinate or Y-axis Y represents mechanical stress within the root body 2. As is visible in diagram C13, a very uniform stress distribution along the axial direction A1 can be achieved due to the combination of the slot 20 being filled by the insert 3.

Fig. 14 schematically shows a flow diagram of a method M that can be used to manufacture the blade 100 described above. In a first step M1, the airfoil body and the root body 2 are integrally casted. For example, a core may be used that defines the shape of the inner void 10 of the airfoil body 1. The core may, for example, define a continuous channel from the airfoil body 1 through the root body 2 along the radial direction. Alternatively, the core may define the inner void 10 and a channel 16 connected to the inner void 10 and extending in the axial direction through the root body 2, as exemplarily shown in Fig. 12.

In a further step M2, the receiving slot 20 is machined into the root body 2. This step, generally, may include grinding, drilling, cutting, or similar removal machining processes. For example, the slot 20 as a whole may be machined from the massive material of the root body 2. Alternatively, machining the slot 20 may include widening or enlarging the radial channel defined by the core.

In another step M3, the insert 3 is inserted into the receiving slot 20 of the root body 2. Optionally, step M3 may also include fixing the insert 3 in the slot 20, e.g. by brazing. Moreover, when the core defines an axial channel 16 as schematically shown in Fig. 12, this channel 16 may be closed by plugs 17, e.g. by means of brazing.

Although specific embodiments have been illustrated and described herein, it will be appreciated by those of at least ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

### List of reference signs

- 1: airfoil body
- 1a: aerodynamic surface
- 1s: suction side
- 1p: pressure side
- 2: root body
- 3: insert
- 10: inner cavity or void
- 11: root end of airfoil body
- 12: tip end of airfoil body
- 16: channel
- 20: receiving slot
- 21: bottom end of root body
- 22: top end of root body
- 23: leading end of root body
- 23a: first end surface of root body
- 24: trailing end of root body
- 24a: second end surface of root body
- 30: through holes
- 31: first radial end of insert
- 32: second radial end of insert
- 33: first axial end of insert
- 34: second axial end of insert
- 35: first end plate
- 36: second end plate
- 37: central region of insert
- 38: grooves
- 39: rim

- 100: blade
- 200: blade assembly
- 210: disc
- 212: coupling groove
- 300: gas turbine
- 310: compressor section
- 320: turbine section
- 330: combustion chamber
- 340: central shaft

- A1: axial direction
- A3: insert axial direction
- R1: radial direction
- R3: insert radial direction
- T3: insert thickness direction

## Claims

1. A blade (100) for a turbo machine, in particular for a gas turbine (300), comprising:
an airfoil body (1) extending in a radial direction (R1) between a root end (11) and a tip end (12), the air foil body (1) comprising an inner cavity or void (10) that extends from the root end (11) in the radial direction (R1);
a root body (2) integrally formed with the airfoil body (1) and extending from the root end (11) of the air foil body (1) to a bottom end (21) in the radial direction (R1), the root body (2) comprising a receiving slot (20) extending from the bottom end (21) in the radial direction (R1) and opening into the inner void (10) of the air foil body (1); and
a block shaped insert (3), wherein the dimensions and a shape of the insert (3) and the slot (20) of the root body (2) correspond to each other, and the insert (3) is positioned within the receiving slot (20) of the root body (2), **characterised in that**
the insert (3) comprising a plurality of through holes (30) extending in the radial direction (R1) to form a fluid connection to the inner void (10).

2. The blade (100) according to claim 1, wherein the root body (2) extends between a front end (23) and an aft end (24) along an axial direction (A1) that runs transverse to the radial direction (R1), wherein the receiving slot (20) extends completely between the front end (23) and the aft end (24) of the root body (2), and wherein the insert (3) positioned in the receiving slot (20) extends between the front end (23) and the aft end (24) of the root body (2).

3. The blade (100) according to claim 2, wherein the insert (3) comprises a first end plate (35) formed at a first axial end (33) of the insert (3) and a second end plate (36) formed at a second axial end (34) of the insert (3), wherein the first end plate (35) abuts a first end surface (23a) forming the front end (23) of the root body (2), and wherein the second end plate (36) abuts a second end surface (24b) forming the aft end (34) of the root body (2).

4. The blade (100) according to claim 2 or 3, wherein the through holes (30) are only formed in a central region (37) of the insert (3) that, with regard to the axial direction (A1), overlaps with the inner void (10) of the airfoil body (1).

5. The blade (100) according to claim 1, wherein the root body (2) extends between a front end (23) and an aft end (24) along an axial direction (A1) that runs transverse to the radial direction (R1), wherein the receiving slot (20) extends in the axial direction (A1) and ends distanced to the front end (23) and the aft end (24).

6. The blade (100) according to any one of the preceding claims, wherein the insert (3) is brazed to the root body (2), or wherein the insert (3) is friction fit into the receiving slot (20).

7. The blade (100) according to any one of the preceding claims, wherein the through holes (30) of the insert (3) have a circular, an elliptic, or racetrack shaped cross-section.

8. The blade (100) according to any one of the preceding claims, wherein the through holes (30) of the insert (3) are arranged in a row along an insert axial direction (A3).

9. The blade (100) according to claim 8, wherein a ratio between a distance (c30) between adjacent holes (30) in the insert axial direction (A3) and a diameter (b30) of the through holes (30) with respect to the insert axial direction (A3) is greater than one.

10. The blade (100) according to any one of the preceding claims, wherein the insert (3) has a thickness (t3) with regard to an insert thickness direction (T3), and wherein a ration between a diameter (t30) of the through holes (30) with regard to the insert thickness direction (T3) and the thickness (t3) is within a range between 0.1 and 0.8.

11. The blade (100) according to any one of the preceding claims, wherein the insert (3) further includes grooves (38) formed at a circumferential surface (3c) of the insert (3) and extending in the radial direction (R1) between opposite radial ends (31, 32) of the insert (3), wherein the grooves (38) together with an inner surface (20c) of the slot (20) form fluid channels connected to the inner void (10) of the airfoil body (1).

12. A blade assembly (200), comprising:
a plurality of blades (100) according to any one of the preceding claims; and
a rotor disk (210) to which said plurality of the turbine blades (100) is coupled.

13. A gas turbine (300) comprising the turbine blade assembly (200) according to claim 12.

14. The gas turbine (300) according to claim 13, wherein the blade assembly (200) forms part of a turbine section (320) of the gas turbine (300).

15. A method (M) for manufacturing a blade (100) according to any one of claims 1 to 11, the method (M) comprising:
integrally casting (M1) an airfoil body (1) and a root body (2), the airfoil body extending in a radial direction (R1) between a root end (11) and a tip end (12) and comprising an inner void (10) that extends from the root end (11) in the radial direction (R1), the root body (2) extending from the root end (11) of the air foil body (1) to a bottom end (21) in the radial direction (R1);
machining (M2) a receiving slot (20) into the root body (2), the receiving slot (20) extending from the bottom end (21) in the radial direction (R1) and opening into the inner void (10) of the air foil body (1); and
introducing (M3) a block shaped insert (3) into the receiving slot (20) of the root body (2), wherein the dimensions and a shape of the insert (3) and the slot (20) of the root body (2) correspond to each other, the insert (3) comprising a plurality of through holes (30) extending in the radial direction (R1) to form a fluid connection to the inner void (10).

## Patentansprüche

1. Schaufel (100) für eine Turbomaschine, insbesondere für eine Gasturbine (300), umfassend:
einen Schaufelblattkörper (1), der sich in einer radialen Richtung (R1) zwischen einem Ansatzende (11) und einem Spitzenende (12) erstreckt, wobei der Schaufelblattkörper (1) eine innere Kavität oder einen inneren Hohlraum (10) umfasst, die bzw. der sich von dem Ansatzende (11) in der radialen Richtung (R1) erstreckt;
einen Ansatzkörper (2), der integral mit dem Schaufelblattkörper (1) gebildet ist und sich von dem Ansatzende (11) des Schaufelblattkörpers (1) zu einem Bodenende (21) in der radialen Richtung (R1) erstreckt, wobei der Ansatzkörper (2) einen Aufnahmeschlitz (20) umfasst, der sich von dem Bodenende (21) in der radialen Richtung (R1) erstreckt und sich in den inneren Hohlraum (10) des Schaufelblattkörpers (1) öffnet; und
einen blockförmigen Einsatz (3), wobei die Dimensionen und eine Form des Einsatzes (3) und des Schlitzes (20) des Ansatzkörpers (2) zueinander korrespondieren und der Einsatz (3) innerhalb des Aufnahmeschlitzes (20) des Ansatzkörpers (2) positioniert ist, **dadurch gekennzeichnet, dass** der Einsatz (3) eine Mehrzahl von Durchgangslöchern (30) umfasst, die sich in der radialen Richtung (R1) erstrecken, um eine Fluidverbindung zu dem inneren Hohlraum (10) zu bilden.

2. Schaufel (100) nach Anspruch 1, wobei sich der Ansatzkörper (2) zwischen einem vorderen Ende (23) und einem hinteren Ende (24) entlang einer axialen Richtung (A1) erstreckt, die quer zu der radialen Richtung (R1) verläuft, wobei sich der Aufnahmeschlitz (20) vollständig zwischen dem vorderen Ende (23) und dem hinteren Ende (24) des Ansatzkörpers (2) erstreckt und wobei sich der in dem Aufnahmeschlitz (20) positionierte Einsatz (3) zwischen dem vorderen Ende (23) und dem hinteren Ende (24) des Ansatzkörpers (2) erstreckt.

3. Schaufel (100) nach Anspruch 2, wobei der Einsatz (3) eine erste Endplatte (35), die an einem ersten axialen Ende (33) des Einsatzes (3) gebildet ist, und eine zweite Endplatte (36), die an einem zweiten axialen Ende (34) des Einsatzes (3) gebildet ist, umfasst, wobei die erste Endplatte (35) an eine erste Endoberfläche (23a) anstößt, die das vordere Ende (23) des Ansatzkörpers (2) bildet, und wobei die zweite Endplatte (36) an eine zweite Endoberfläche (24b) anstößt, die das hintere Ende (34) des Ansatzkörpers (2) bildet.

4. Schaufel (100) nach Anspruch 2 oder 3, wobei die Durchgangslöcher (30) nur in einem zentralen Bereich (37) des Einsatzes (3) gebildet sind, der mit Bezug auf die axiale Richtung (A1) mit dem inneren Hohlraum (10) des Schaufelblattkörpers (1) überlappt.

5. Schaufel (100) nach Anspruch 1, wobei sich der Ansatzkörper (2) zwischen einem vorderen Ende (23) und einem hinteren Ende (24) entlang einer axialen Richtung (A1) erstreckt, die quer zu der axialen Richtung (R1) verläuft, wobei sich der Aufnahmeschlitz (20) in der axialen Richtung (A1) erstreckt und beabstandet von dem vorderen Ende (23) und dem hinteren Ende (24) endet.

6. Schaufel (100) nach einem der vorangehenden Ansprüche, wobei der Einsatz (3) mit dem Ansatzkörper (2) verlötet ist oder wobei der Einsatz (3) reibschlüssig in dem Aufnahmeschlitz (20) eingepasst ist.

7. Schaufel (100) nach einem der vorangehenden Ansprüche, wobei die Durchgangslöcher (30) des Einsatzes (3) einen kreisförmigen, einen elliptischen oder einen laufbahnförmigen Querschnitt aufweisen.

8. Schaufel (100) nach einem der vorangehenden Ansprüche, wobei die Durchgangslöcher (30) des Einsatzes (3) in einer Reihe entlang einer Einsatzaxialrichtung (A3) angeordnet sind.

9. Schaufel (100) nach Anspruch 8, wobei ein Verhältnis zwischen einem Abstand (c30) zwischen angrenzenden Löchern (30) in der Einsatzaxialrichtung (A3) und einem Durchmesser (b30) der Durchgangslöcher (30) mit Bezug auf die Einsatzaxialrichtung (A3) größer als eins ist.

10. Schaufel (100) nach einem der vorangehenden Ansprüche, wobei der Einsatz (3) eine Dicke (t3) mit Bezug auf eine Einsatzdickenrichtung (T3) aufweist und wobei ein Verhältnis zwischen einem Durchmesser (t30) der Durchgangslöcher (30) mit Bezug auf die Einsatzdickenrichtung (T3) und die Dicke (t3) innerhalb eines Bereichs zwischen 0,1 und 0,8 liegt.

11. Schaufel (100) nach einem der vorangehenden Ansprüche, wobei der Einsatz (3) weiterhin Nuten (38) beinhaltet, die an einer Umfangsoberfläche (3c) des Einsatzes (3) gebildet sind und sich in der radialen Richtung (R1) zwischen gegenüberliegenden radialen Enden (31, 32) des Einsatzes erstrecken, wobei die Nuten (38) zusammen mit einer inneren Oberfläche (20c) des Schlitzes (20) Fluidkanäle bilden, die mit dem inneren Hohlraum (10) des Schaufelblattkörpers (1) verbunden sind.

12. Schaufelanordnung (200), umfassend:
eine Mehrzahl von Schaufeln (100) nach einem der vorangehenden Ansprüche; und
eine Rotorscheibe (210), an die die Mehrzahl von Turbinenschaufeln (100) gekoppelt ist.

13. Gasturbine (300), umfassend die Turbinenschaufelanordnung (200) nach Anspruch 12.

14. Gasturbine (300) nach Anspruch 13, wobei die Schaufelanordnung (200) Teil eines Turbinenabschnitts (320) der Gasturbine (300) ist.

15. Verfahren (M) zum Herstellen einer Schaufel (100) nach einem der Ansprüche 1 bis 11, wobei das Verfahren (M) umfasst:
integrales Gießen (M1) eines Schaufelblattkörpers (1) und eines Ansatzkörpers (2), wobei sich der Schaufelblattkörper in einer radialen Richtung (R1) zwischen einem Ansatzende (11) und einem Spitzenende (12) erstreckt und einen inneren Hohlraum (10) umfasst, der sich von dem Ansatzende (11) in der radialen Richtung (R1) erstreckt, wobei sich der Ansatzkörper (2) von dem Ansatzende (11) des Schaufelblattkörpers (1) zu einem Bodenende (21) in der radialen Richtung (R1) erstreckt;
Einarbeiten (M2) eines Aufnahmeschlitzes (20) in den Ansatzkörper (2), wobei sich der Aufnahmeschlitz (20) von dem Bodenende (21) in der radialen Richtung (R1) erstreckt und sich in den inneren Hohlraum (10) des Schaufelblattkörpers (1) öffnet;
Einführen (M3) eines blockförmigen Einsatzes (3) in den Aufnahmeschlitz (20) des Ansatzkörpers (2), wobei die Abmessungen und eine Form des Einsatzes (3) und des Schlitzes (20) des Ansatzkörpers (2) einander entsprechen, wobei der Einsatz (3) eine Mehrzahl von Durchgangslöchern (30) umfasst, die sich in der radialen Richtung (R1) erstrecken, um eine Fluidverbindung zu dem inneren Hohlraum (10) zu bilden.

## Revendications

1. Aube (100) pour une turbomachine, en particulier pour une turbine à gaz (300), comprenant :
un corps de profil aérodynamique (1) s'étendant dans une direction radiale (R1) entre une extrémité d'emplanture (11) et une extrémité de pointe (12), ledit corps de profil aérodynamique (1) comprenant une cavité ou un vide interne (10) s'étendant depuis l'extrémité d'emplanture (11) dans la direction radiale (R1) ;
un corps d'emplanture (2) formé d'un seul tenant avec le corps de profil aérodynamique (1) et s'étendant depuis l'extrémité d'emplanture (11) du corps de profil aérodynamique (1) vers une extrémité inférieure (21) dans la direction radiale (R1), le corps d'emplanture (2) présentant une fente de réception (20) s'étendant depuis l'extrémité inférieure (21) dans la direction radiale (R1) et ouverte sur le vide interne (10) du corps de profil aérodynamique (1) ; et
un insert en forme de bloc (3), où les dimensions et la forme de l'insert (3) et de la fente (20) du corps d'emplanture (2) correspondent entre elles, et l'insert (3) est mis en place à l'intérieur de la fente de réception (20) du corps d'emplanture (2), **caractérisée en ce que** l'insert (3) présente une pluralité de trous traversants (30) s'étendant dans la direction radiale (R1) pour réaliser une liaison fluidique avec le vide interne (10).

2. Aube (100) selon la revendication 1, où le corps d'emplanture (2) s'étend entre une extrémité avant (23) et une extrémité arrière (24) dans une direction axiale (A1) transversale à la direction radiale (R1), où la fente de réception (20) s'étend en totalité entre l'extrémité avant (23) et l'extrémité arrière (24) du corps d'emplanture (2), et où l'insert (3) mis en place dans la fente de réception (20) s'étend entre l'extrémité avant (23) et l'extrémité arrière (24) du corps d'emplanture (2).

3. Aube (100) selon la revendication 2, où l'insert (3) comprend une première plaque d'extrémité (35) formée à une première extrémité axiale (33) de l'insert (3), et une deuxième plaque d'extrémité (36) formée à une deuxième extrémité axiale (34) de l'insert (3), où la première plaque d'extrémité (35) est en appui contre une première surface d'extrémité (23a) forming l'extrémité avant (23) du corps d'emplanture (2), et où la deuxième plaque d'extrémité (36) est en appui conte une deuxième surface d'extrémité (24b) formant l'extrémité arrière (34) du corps d'emplanture (2).

4. Aube (100) selon la revendication 2 ou la revendication 3, où les trous traversants (30) sont formés seulement dans une partie centrale (37) de l'insert (3), laquelle chevauche, dans la direction axiale (A1), le vide interne (10) du corps de profil aérodynamique (1).

5. Aube (100) selon la revendication 1, où le corps d'emplanture (2) s'étend entre une extrémité avant (23) et une extrémité arrière (24) dans une direction axiale (A1) transversale à la direction radiale (R1), où la fente de réception (20) s'étend dans la direction axiale (A1) et se termine à distance de l'extrémité avant (23) et de l'extrémité arrière (24).

6. Aube (100) selon l'une des revendications précédentes, où l'insert (3) est brasé sur le corps d'emplanture (2), ou où l'insert (3) est ajusté par friction dans la fente de réception (20).

7. Aube (100) selon l'une des revendications précédentes, où les trous traversants (30) de l'insert (3) ont une section transversale de forme circulaire, elliptique, ou oblongue.

8. Aube (100) selon l'une des revendications précédentes, où les trous traversants (30) de l'insert (3) sont disposés en rangée dans une direction axiale d'insert (A3).

9. Aube (100) selon la revendication 8, où le rapport entre la distance (c30) entre trous adjacents (30) dans la direction axiale d'insert (A3) et le diamètre (b30) des trous traversants (30) dans la direction axiale d'insert (A3) est supérieur à un.

10. Aube (100) selon l'une des revendications précédentes, où l'insert (3) a une épaisseur (t3) dans le sens de l'épaisseur d'insert (T3), et où le rapport entre le diamètre (t30) des trous traversants (30) dans le sens de l'épaisseur d'insert (T3) et l'épaisseur (t3) est compris entre 0,1 et 0,8.

11. Aube (100) selon l'une des revendications précédentes, où l'insert (3) présente en outre des rainures (38) formées sur une surface circonférentielle (3c) de l'insert (3) et s'étendant dans la direction radiale (R1) entre extrémités radiales opposées (31, 32) de l'insert (3), lesdites rainures (38) formant avec une surface intérieure (20c) de la fente (20) des canaux fluidiques reliés au vide interne (10) du corps de profil aérodynamique (1).

12. Ensemble d'aubes (200), comprenant :
une pluralité d'aubes (100) selon l'une des revendications précédentes ; et
un disque de rotor (210) auquel la pluralité d'aubes de turbine (100) est raccordée.

13. Turbine à gaz (300), comprenant l'ensemble d'aubes de turbine (200) selon la revendication 12.

14. Turbine à gaz (300) selon la revendication 13, où l'ensemble d'aubes (200) forme une partie d'une section de turbine (320) de la turbine à gaz (300).

15. Procédé (M) de fabrication d'une aube (100) selon l'une des revendications 1 à 11, ledit procédé (M) comprenant :
la coulée intégrale (M1) d'un corps de profil aérodynamique (1) et d'un corps d'emplanture (2), le corps de profil aérodynamique s'étendant dans une direction radiale (R1) entre une extrémité d'emplanture (11) et une extrémité de pointe (12) et comprenant un vide interne (10) s'étendant depuis l'extrémité d'emplanture (11) dans la direction radiale (R1), le corps d'emplanture (2) s'étendant depuis l'extrémité d'emplanture (11) du corps de profil aérodynamique (1) vers une extrémité inférieure (21) dans la direction radiale (R1) ;
l'usinage (M2) d'une fente de réception (20) dans le corps d'emplanture (2), ladite fente de réception (20) s'étendant depuis l'extrémité inférieure (21) dans la direction radiale (R1) et s'ouvrant sur le vide interne (10) du corps de profil aérodynamique (1) ; et
l'introduction (M3) d'un insert en forme de bloc (3) dans la fente de réception (20) du corps d'emplanture (2), où les dimensions et la forme de l'insert (3) et de la fente (20) du corps d'emplanture (2) correspondent entre elles, l'insert (3) présentant une pluralité de trous traversants (30) s'étendant dans la direction radiale (R1) pour former une liaison fluidique avec le vide interne (10).
